# EUROPEAN PATENT APPLICATION

(11) **EP 4 517 874 A1**
(43) Date of publication of application: **05.03.2025**
(21) Application number: 23880160.9
(22) Date of filing: 17.10.2023
(51) Int. Cl.: H01M 4/36, H01M 4/48, H01M 4/587, H01M 4/525, H01M 4/505, H01M 10/052, H01M 4/02

(54) **SECONDARY BATTERY**

(30) Priority: 18.10.2022 KR 20220133985; 16.10.2023 KR 20230137406
(71) Applicant: LG Energy Solution, Ltd., Seoul 07335 (KR)
(72) Inventor: KIM, Sangho, Daejeon 34122 (KR); OH, Sang Seung, Daejeon 34122 (KR)
(74) Representative: Plasseraud IP
(86) International application number: PCT/KR2023/015995
(87) International publication number: WO 2024/085583

(57) **Abstract**

The present specification provides a secondary battery including a positive electrode, a negative electrode, a separator, and an electrolyte, wherein the negative electrode includes a negative electrode active material layer, wherein the negative electrode active material layer includes a SiO_{β} (0<β<2) oxide and a carbon-based active material, wherein the positive electrode includes a positive electrode active material layer, wherein the positive electrode active material layer includes a small particle active material whose average particle diameter (D₅₀) is 3 µm to 10 µm and a large particle active material whose average particle diameter (D₅₀) is 8 µm to 20 µm, and wherein the positive electrode active material layer has a porosity of 19% to 23%.

## Description

### [Technical Field]

This application claims priority to and the benefit of Korean Patent Application No. 10-2022-0133985 filed in the Korean Intellectual Property Office on October 18, 2022, and Korean Patent Application No. 10-2023-0137406 filed in the Korean Intellectual Property Office on October 16, 2023, the entire contents of which are incorporated herein by reference.

The present invention relates to a secondary battery.

### [Background Art]

Due to characteristics of being easily applicable to various products and electrical characteristics such as high energy density, a secondary battery is not only commonly applied to a portable device, but universally applied to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the advantage that no by-products are generated from the use of energy.

In general, a secondary battery includes a positive electrode, a negative electrode, a separator interposed between the positive electrode and the negative electrode, an electrolyte, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based compound, a silicon-based compound, a mixture thereof, or the like is used as the negative electrode active material.

Recently, in order to develop a battery allowing for rapid charging and having a high energy density, a mixture of a carbon-based compound such as graphite and a silicon-based compound is used for a negative electrode. However, when the silicon-based compound is included, the electrode expansion/contraction due to the use of the silicon-based compound occurs at the end of discharge, resulting in side reactions, which shortens the life of the battery and deteriorates room temperature cycle characteristics. Therefore, there is a need to develop batteries to solve these problems.

### [Detailed Description of the Invention]

### [Technical Problem]

The present invention has been made in an effort to provide a secondary battery with improved life and room temperature cycle characteristics of the battery by reducing intervention of a silicon-based compound (SiO_{β} (0<β<2) oxide) at the end of discharge even though the SiO_{β} (0<β<2) oxide is included in a negative electrode active material layer.

However, the technical problem to be solved by the present invention is not limited to the above-described problem, and other problems not described will be apparently understood by one skilled in the art from the following description.

### [Technical Solution]

An exemplary embodiment of the present invention provides a secondary battery including a positive electrode, a negative electrode, a separator, and an electrolyte, wherein the negative electrode includes a negative electrode active material layer, wherein the negative electrode active material layer includes a SiO_{β} (0<β<2) oxide and a carbon-based active material, wherein the positive electrode includes a positive electrode active material layer, wherein the positive electrode active material layer includes a small particle active material whose average particle diameter (D₅₀) is 3 µm to 10 µm and a large particle active material whose average particle diameter (D₅₀) is 8 µm to 20 µm, and wherein the positive electrode active material layer has a porosity of 19% to 23%.

### [Advantageous Effects]

The secondary battery of the present invention includes the SiO_{β} (0<β<2) oxide in the negative electrode active material layer and the small particle active material whose average particle diameter (D₅₀) is 3 µm to 10 µm and the large particle active material whose average particle diameter (D₅₀) is 8 µm to 20 µm in the positive electrode active material layer, making it possible to increase the resistance of the positive electrode at the end of discharge. A voltage of the secondary battery is determined by a difference between a positive electrode voltage and a negative electrode voltage. By increasing the resistance of the positive electrode at the end of discharge, the positive electrode voltage is drastically reduced, and accordingly, the negative electrode voltage is induced to increase relatively a little, leading to a reduction in depth of use of the silicon-based compound (SiO_{β} (0<β<2) oxide), so that a secondary battery with improved life and room temperature cycle characteristics can be obtained.

Specifically, when a nickel-based active material in the form of a single particle with a high nickel content is used for a positive electrode active material layer in order to increase the energy density of the battery and the roll-pressing density and to reduce breakage of an active material and a silicon-based compound such as SiO_{β} (0<β<2) oxide is included in a negative electrode active material layer in order to enable rapid charging, the voltage of the negative electrode rises rapidly at the end of discharge, leading to an excessive increase in the use of the silicon-based compound (SiO_{β} (0<β<2) oxide) included in the negative electrode active material layer (increase in depth of use) and a deterioration in the life performance of the battery. In order to improve this, the small particle active material whose average particle diameter (D₅₀) is 3 µm to 10 µm and the large particle active material whose average particle diameter (D₅₀) is 8 µm to 20 µm are included in the positive electrode active material layer, allowing for rapid charging, improving the resistance of the positive electrode, and reducing the depth of use of the silicon-based compound (SiO_{β} (0<β<2) oxide) due to the voltage difference between the positive electrode and the negative electrode, whereby a secondary battery with improved room temperature life can be obtained.

### [Brief Description of Drawings]

FIG. 1 is a view showing cycle life characteristics measured by performing 0.33C charging and 0.5C discharging at room temperature for lithium secondary batteries prepared in Example 1 and Comparative Example 1.
FIG. 2 is a view showing voltage curves during discharge situations of the three-electrode system secondary batteries prepared in Example 2 and Comparative Example 2.
FIG. 3 is a view showing measurement results of cycle life characteristics of lithium secondary batteries prepared in Example 1 and Comparative Examples 1 and 3.

### [Best Mode]

Hereinafter, the present invention will be described in detail. The following description is intended to aid understanding of the present invention, and does not determine or limit the scope of the invention.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the positive electrode or negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the positive electrode or negative electrode active material can be confirmed through ICP analysis, and the ICP analysis may be performed by using an inductively coupled plasma atomic emission spectrometer (ICPAES, Perkin-Elmer 7300).

In the present specification, the end of discharge refers to a region where the SOC (states of charge) of a full cell is 10% or less.

In the present specification, the "average particle diameter (D₅₀) may be defined as a particle diameter corresponding to 50% of the cumulative volume in the particle diameter distribution curve. The average particle diameter (D₅₀) may be measured using a laser diffraction method. For example, a method for measuring an average particle diameter (D₅₀) of the positive electrode active material may include dispersing particles of the positive electrode active material in a dispersion medium, introducing the dispersion into a commercially available laser diffraction particle size measuring device (e.g., HORIBA LA-960), irradiating the dispersion with ultrasonic waves of approximately 28 kHz with an output of 60 W, and then calculating an average particle diameter (D₅₀) corresponding to 50% of the cumulative volume in the measuring device.

In the present specification, the term "single particle" is a concept in contrast to the form of a secondary particle formed by agglomeration of tens to hundreds of primary particles, and means a particle composed of 10 or less primary particles. Specifically, in the present invention, the single particle may be a single particle composed of one primary particle, or may be a form of particle formed by agglomeration of several primary particles.

In the present specification, the term "primary particle" refers to the smallest unit of particle recognized when observing an active material through a scanning electron microscope, and "secondary particle" refers to a secondary structure formed by agglomeration of tens to hundreds of primary particles.

In the present specification, the expression "particle" refers to a granule with a size of micron, and when magnified and observed, the particle can be identified as 'grain' having a crystal form with a size of tens of nanometers. When the grain is further magnified and observed, it is possible to identify a separated region having a form in which atoms form a lattice structure in a predetermined direction, wherein the region is referred to as a 'crystallite'. A size of the particle observed by X-ray diffraction (XRD) is defined as a size of the crystallite. The size of the crystallite may be quantitatively determined from the Scherrer equation by using XRD data.

A secondary battery of the present invention is a secondary battery including a positive electrode, a negative electrode, a separator, and an electrolyte, wherein the negative electrode includes a negative electrode active material layer, wherein the negative electrode active material layer includes a SiO_{β} (0<β<2) oxide and a carbon-based active material, wherein the positive electrode includes a positive electrode active material layer, and wherein the positive electrode active material layer includes a small particle active material whose average particle diameter (D₅₀) is 3 µm to 10 µm and a large particle active material whose average particle diameter (D₅₀) is 8 µm to 20 µm.

In the present specification, when the negative electrode active material layer includes a SiO_{β} (0<β<2) oxide, the resistance of the negative electrode rises rapidly at the end of discharge, and the resistance of the positive electrode using a positive electrode material with low resistance characteristics decreases rapidly, so that a difference between the resistance of the negative electrode and the resistance of the positive electrode greatly increases. Accordingly, there is a problem that the deterioration of the negative electrode progresses rapidly, shortening the life of the battery and deteriorating room temperature cycle characteristics. In order to solve this problem, the small particle active material whose average particle diameter (D₅₀) is 3 µm to 10 µm and the large particle active material whose average particle diameter (D₅₀) is 8 µm to 20 µm are included in the positive electrode active material layer, reducing the rapid decrease in resistance of the positive electrode, whereby a battery with improved life and room temperature cycle characteristics can be obtained.

### <Positive Electrode>

The positive electrode of the present invention includes a positive electrode active material layer, and the positive electrode active material layer includes a small particle active material whose average particle diameter (D₅₀) is 3 µm to 10 µm and a large particle active material whose average particle diameter (D₅₀) is 8 µm to 20 µm, and the positive electrode active material layer has a porosity of 19% to 23%.

According to another exemplary embodiment of the present invention, the positive electrode active material layer includes a small particle active material whose average particle diameter (D₅₀) is 3 µm to 7 µm and a large particle active material whose average particle diameter (D₅₀) is 8 µm to 20 µm, and the positive electrode active material layer has a porosity of 19% to 23%.

According to an exemplary embodiment of the present invention, the small particle active material and the large particle active material each contain 80 mol% or more of nickel with respect to a total number of moles of transition metals excluding lithium.

In an exemplary embodiment of the present invention, a weight ratio of the small particle active material and the large particle active material (weight of the small particle active material: weight of the large particle active material) is 2:8 to 8:2. When the content of the large particle active material satisfies the above range, there is an effect of increasing the resistance of the positive electrode at the end of discharge, and when the content deviates from the above range, it is difficult to control the porosity to an appropriate range due to breakage of the large particle.

According to an exemplary embodiment of the present invention, the small particle active material has a single particle form.

According to another exemplary embodiment of the present invention, the small particle active material has a single particle form in which one or several primary particles are agglomerated.

In an exemplary embodiment of the present invention, the large particle active material has a secondary particle form.

The small particle active material and the large particle active material may each independently include a lithium composite metal oxide including lithium and one or more metals such as cobalt, manganese, nickel, or aluminum. More specifically, a lithium-nickel-manganese-cobalt-based oxide (e.g., Li(NiₚCo_{q}Mnᵣ₁)O₂ (here, 0 < p < 1, 0 < q < 1, 0 < r1 < 1, p+q+r1=1) or Li(Niₚ₁Co_{q1}Mnᵣ₂)O₄ (here, 0<p1<2, 0<q1<2, 0<r2<2, p1+q1+r2=2), etc.), a lithium-nickel-cobalt-transition metal (M) oxide (e.g., Li(Ni)ₚ₂Co_{q2}Mnᵣ₃M_{S2})O₂ (here, M is selected from the group consisting of Al, Fe, V, Cr, Ti, Ta, Mg and Mo, and p2, q2, r3 and s2 are each independent atomic fraction of elements, 0<p2<1, 0 < q2 < 1, 0≤r3< 1, 0 < s2 < 1, p2+q2+r3+s2=1), etc.), and the like may be exemplified, and any one or two or more of these compounds may be included. However, the present invention is not limited thereto.

The positive electrode may further include a positive electrode current collector in addition to the positive electrode active material layer described above. In this case, the positive electrode active material layer is formed on at least one surface of the positive electrode current collector.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 µm to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVdF), vinylidene fluoridehexafluoropropylene copolymer (PVdF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, various copolymers thereof, or the like, and any one thereof or a mixture of two or more thereof may be used.

The positive electrode active material layer may be formed by applying a positive electrode slurry including a binder and/or a conductive material together with the above-described small particle active material and large particle active material to at least one surface of a positive electrode current collector, followed by drying and roll-pressing the same.

The positive electrode slurry according to an exemplary embodiment of the present invention may further include a solvent for positive electrode slurry formation. Specifically, the solvent for positive electrode slurry formation may include methylpyrrolidone (NMP) or the like in order to facilitate dispersion of components.

In an exemplary embodiment of the present invention, a solid content of the positive electrode slurry may be 20 parts by weight to 85 parts by weight, and specifically 30 parts by weight to 80 parts by weight on the basis of a total of 100 parts by weight of the positive electrode slurry.

According to an exemplary embodiment of the present invention, a porosity of the positive electrode is 19% to 23%. If the porosity of the positive electrode is less than 19%, a side reaction may occur due to breakage of the positive electrode active material, and sufficient contact with the electrolyte solution may not be implemented due to the excessively high degree of filling, which may deteriorate the output characteristics or cycle characteristics of the battery. On the other hand, if the porosity of the positive electrode exceeds 23%, there is a problem that the energy density of the battery is lowered. The porosity of the positive electrode can be controlled by the presence or absence of surface modification of the positive electrode active material, types of binder and solvent, roll-pressing temperature and pressure, and the like, in addition to the particle diameter of the positive electrode active material described above.

The porosity can be calculated as (1-(roll-pressing density/true density of electrode))*100(%). In this case, the roll-pressing density can be calculated as follows.
roll-pressing density: electrode weight (g) excluding foil after roll-pressing electrode/electrode volume excluding foil (area of sample* thickness of electrode layer, cm³)

Here, the roll-pressing density is a density of a state before the roll-pressed electrode is put into a battery and activated (charged or discharged), so it has the same meaning as a density of the active material layer of the electrode used to manufacture an electrode assembly or a density of the active material layer of the electrode included in the battery.

The electrode volume excluding the foil refers to a total volume including pores in the electrode, and is calculated as a product of a unit area of the sample and a thickness of an electrode layer after roll pressing.

The true density of the electrode is an inherent density of the electrode active material and can be measured by XRD Rietveld refinement.

### <Negative Electrode>

The negative electrode according to an exemplary embodiment of the present invention includes a negative electrode active material layer, and the negative electrode active material layer includes a SiO_{β} (0<β<2) oxide and a carbon-based active material.

The negative electrode may further include a negative electrode current collector in addition to the negative electrode active material layer described above. In this case, the negative electrode active material layer is formed on at least one surface of the negative electrode current collector. The negative electrode active material layer includes a SiO_{β} (0<β<2) oxide and a carbon-based active material. Furthermore, the negative electrode active material layer may further include a binder and/or a conductive material.

According to an exemplary embodiment of the present invention, the carbon-based active material may be artificial graphite, natural graphite, carbon black or the like.

According to an exemplary embodiment of the present invention, the carbon-based active material can be used without particular limitation, and representative examples thereof may include crystalline carbon, amorphous carbon, or a combination thereof. Examples of the crystalline carbon may include graphite such as amorphous, plate-like, flake-like, spherical or fibrous natural graphite and artificial graphite, and examples of the amorphous carbon may include soft carbon (low-temperature fired carbon), hard carbon, mesophase pitch carbide, fired coke, and the like. The graphite may be natural graphite, artificial graphite, or a mixture thereof. The carbon-based active material may be included in an amount of 60 parts by weight or more and 99 parts by weight or less with respect to a total of 100 parts by weight of the negative electrode active material included in the negative electrode active material layer.

According to an exemplary embodiment of the present invention, the negative electrode active material layer may include an active material including a SiO_{β} (0<β<2) oxide, and a carbon-based active material, and the active material including the SiO_{β} (0<β<2) oxide may be a silicon-based composite particle including SiO_{β} (0<β<2) and a pore.

The SiO_{β} (0<β<2) corresponds to a matrix in the silicon-based composite particle. The SiO_{β} (0<β<2) may be a form of including Si and SiO₂, and the Si may form a phase. That is, the β corresponds to a ratio of the number of O to Si included in the SiO_{β} (0<β<2). When the silicon-based composite particle includes the SiO_{β} (0<β<2), the discharge capacity of a secondary battery can be improved.

The silicon-based composite particle may further include at least one of an Mg compound and a Li compound. The Mg compound and the Li compound may correspond to a matrix in the silicon-based composite particle.

The Mg compound and/or the Li compound may be present in the SiO_{β} (0<β<2) and/or on a surface of the SiO_{β} (0<β<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt% or 0.1 wt% to 10 wt% on the basis of a total of 100 wt% of the active material including the SiO_{β} (0<β<2) oxide. Specifically, the Mg element may be included in an amount of 0.5 wt% to 8 wt% or 0.8 wt% to 4 wt%. When the above range is satisfied, a Mg compound can be included in an appropriate content in the active material including the SiO_{β} (0<β<2) oxide, so the volume change of the silicon-based active material during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c} (2≤a≤4, 0<b≤2, 2≤c≤5) and may be divided into crystalline lithium silicate and amorphous lithium silicate. The crystalline lithium silicate may be present in the silicon-based composite particle in a form of at least one lithium silicate selected from the group consisting of Li₂SiO₃, Li₄SiO₄ and Li₂Si₂O₅, and the amorphous lithium silicate may be a form of LiₐSi_{b}O_{c} (2≤a≤4, 0<b≤2, 2≤c≤5). However, the present invention is not limited thereto.

In an exemplary embodiment of the present specification, the Li element may be included in an amount of 0.1 wt% to 20 wt% or 0.1 wt% to 10 wt% on the basis of a total of 100 wt% of the active material including the SiO_{β} (0<β<2) oxide. Specifically, the Li element may be included in an amount of 0.5 wt% to 8 wt%, and more specifically, 0.5 wt% to 4 wt%. When the above range is satisfied, the Li compound can be included in an appropriate content in the silicon-based active material, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared active material including SiO_{β} (0<β<2) oxide can be analyzed.

In an exemplary embodiment of the present specification, a carbon layer may be provided on a surface of the silicon-based composite particle and/or inside the pore. Conductivity is imparted to the silicon-based composite particle by the carbon layer, so that the initial efficiency, life characteristics, and battery capacity characteristics of a secondary battery including the negative electrode active material including the silicon-based composite particle can be improved. A total amount of the carbon layer included may be 5 wt% to 40 wt% on the basis of a total of 100 wt% of the silicon-based composite particle.

In an exemplary embodiment of the present specification, the carbon layer may include at least one of amorphous carbon or crystalline carbon.

In addition, in an exemplary embodiment of the present invention, the SiO_{β} (0<β<2) oxide is included in an amount of 1 part by weight to 15 parts by weight, preferably 1 part by weight to 10 parts by weight, and more preferably 5 parts by weight to 10 parts by weight on the basis of 100 parts by weight of the negative electrode active material. When the content of the SiO_{β} (0<β<2) oxide satisfies the range described above, an improved effect in terms of energy density and cell resistance is obtained, and an excellent effect in terms of life is also obtained because the volume expansion that occurs during charging/discharging is small.

The negative electrode active material layer may be formed by applying a negative electrode slurry including a binder and/or a conductive material together with the above-described SiO_{β} (0<β<2) oxide and carbon-based active material to at least one surface of a negative electrode current collector, followed by drying and roll-pressing the same.

According to an exemplary embodiment of the present specification, the negative electrode slurry may further include an additional negative electrode active material, in addition to the SiO_{β} (0<β<2) oxide and the carbon-based active material.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

The binder may include at least one selected from the group consisting of polyvinylidenefluoridehexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder; metal powder such as aluminum and nickel powder; a conductive whisker such as zinc oxide and potassium titanate; a conductive metal oxide such as titanium oxide; a conductive material such as polyphenylene derivative, and the like may be used.

The negative electrode slurry may further include a thickener such as sodium carboxymethyl cellulose (Na-CMC), carboxymethyl cellulose lithium (Li-CMC), and cellulose nanofiber (CNF).

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 parts by weight to 75 parts by weight, and specifically 30 parts by weight to 70 parts by weight on the basis of a total of 100 parts by weight of the negative electrode slurry.

### <Secondary Battery>

A secondary battery according to an exemplary embodiment of the present invention may include a positive electrode, a negative electrode, a separator interposed between the positive electrode and the negative electrode, and an electrolyte. Since the positive electrode and the negative electrode have been described above, detailed descriptions are omitted.

The separator serves to separate the negative electrode and the positive electrode and to provide a migration path of lithium ions, in which any separator may be used without particular limitation as long as it is typically used as a separator in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high-melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organicbased liquid electrolyte, an inorganic-based liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gammabutyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and may be preferably used because they have high permittivity and thus dissociate a lithium salt well, and such a cyclic carbonate may be more preferably used since it may be mixed with a linear carbonate with low viscosity and low permittivity, such as dimethyl carbonate or diethyl carbonate, in an appropriate ratio and used to prepare an electrolyte with high electric conductivity.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in capacity of a battery, improving a discharge capacity of a battery, and the like, in addition to the above-described electrolyte components.

Another exemplary embodiment of the present invention provides a battery module including the secondary battery as a unit cell, and a battery pack including the same. Since the battery module and the battery pack include the secondary battery having high capacity and high life and cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Mode for Invention

### <Preparation of Cell>

### Example 1

An NCMA large particle positive electrode material having an average particle diameter (D₅₀) of 10 µm and a Ni content of 87 mol% and an NCM single particle positive electrode material having an average particle diameter (D₅₀) of 5 µm and a Ni content of 86 mol% were mixed, as a positive electrode active material, at a weight ratio of 5:5, and the positive electrode active material, CNT as a conductive material, acrylate as a dispersant, and PVdF as a binder were added to methylpyrrolidone (NMP), which is a solvent, at a weight ratio of 97:1:0.4:1.6, whereby a positive electrode slurry was prepared.

Subsequently, the positive electrode slurry was coated/dried on one surface of an aluminum current collector with a thickness of 12 µm by using a slot die and then rolled using a roll pressing method, whereby a positive electrode with a porosity of 22% and a thickness of 125.6 µm was prepared.

A mixture of artificial graphite, natural graphite, and SiO (70 wt%: 22 wt%: 8 wt%) as a negative electrode active material, carbon black and CNT as a conductive material, SBR as a binder, and CMC as a thickener were added to distilled water as a solvent at a weight ratio of 95:1:2:3, whereby a negative electrode slurry was prepared. The negative electrode slurry was coated on a copper current collector with a thickness of 6 µm, and then dried and rolled under the same conditions as those of the positive electrode, whereby a negative electrode was prepared.

A non-aqueous electrolyte solution was prepared in which in an organic solvent containing ethylene carbonate (EC) and ethylmethyl carbonate (EMC) mixed in a composition of 30:70 (volume ratio), tetravinylsilane, ethylene sulfate, 1,3-propenesultone, lithium difluorophosphate, and LiBF₄ were mixed as additives and 1.0 M LiPF₆ was dissolved.

A lithium secondary battery was prepared by interposing a stability-reinforced separator (SRS, 12 µm) was interposed between the positive electrode and the negative electrode, and then injecting the electrolyte solution.

### Example 2

A lithium secondary battery with a three-electrode system was prepared by punching the positive electrode of Example 1 to have a size of 3 cm × 4 cm and punching the negative electrode to have a size of 3.1 cm × 4.1 cm for configuring a positive electrode and a negative electrode, interposing the separator of Example 1-an LTO (Li₄Ti₅O₁₂) wire-a separator between the positive electrode and the negative electrode, and then injecting a diluted electrolyte solution. The LTO wire was prepared by coating a copper conducting wire with a slurry prepared by adding LTO as an active material, carbon black as a conductive material, and PVdF as a binder to NMP as a solvent at a weight ratio of 38.2:2.7:59.1, and then drying the same at 130°C, and was used as a reference electrode.

### Comparative Example 1

A lithium secondary battery with a positive electrode porosity of 22% was prepared in the same manner as in Example 1, except that an NCM single particle positive electrode material having a Ni content of 86% and an average particle diameter (D₅₀) of 5 µm was used as the positive electrode material.

### Comparative Example 2

A lithium secondary battery with a positive electrode porosity of 22% was prepared in the same manner as in Example 2, except that an NCM single particle positive electrode material having a Ni content of 86% and an average particle diameter (D₅₀) of 5 µm was used as the positive electrode material.

### Comparative Example 3

A positive electrode material having the same composition as Example 1 was rolled in a rolling process to have an increased electrode thickness of 132.2 µm as compared with Example 1, leading to a positive electrode material with a porosity of 26%, and a lithium secondary battery was prepared in the same manner as Example 1.

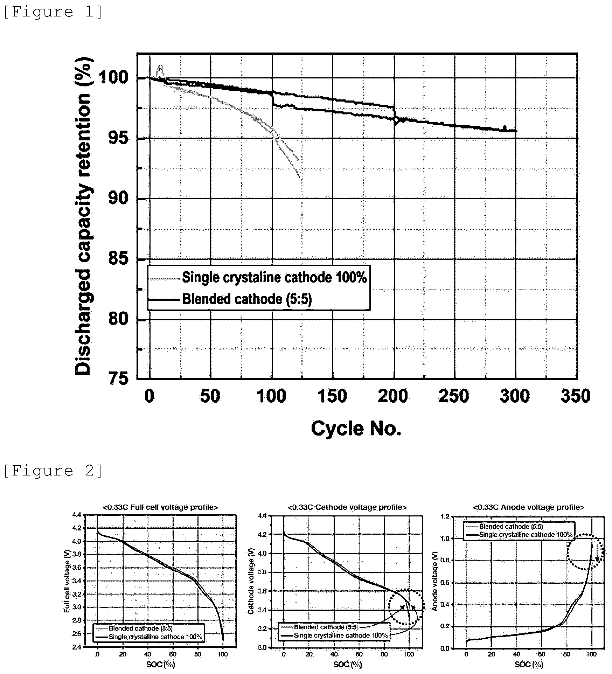

FIG. 1 is a view showing cycle life characteristics measured by performing 0.33C charging and 0.5C discharging at room temperature for lithium secondary batteries prepared in Example 1 and Comparative Example 1. When charging the battery, the charging was set to be started in a CC mode and then changed to a CV mode so that the charging would be cutoff at 4.2 V and 0.05 C. When discharging the battery, the discharging was set to be cutoff at 2.8 V in a CC mode. From FIG. 1, it can be confirmed that the life characteristics of the lithium secondary battery prepared in Example 1 was improved compared to the lithium secondary battery prepared in Comparative Example 1. In FIG. 1, Blended cathode 5:5 shows a graph of Example 1, and Single crystalline cathode 100% shows a graph of Comparative Example 1.

FIG. 2 is a view showing voltage curves during discharge situations of the three-electrode system secondary batteries prepared in Example 2 and Comparative Example 2. In FIG. 2, the first from the left shows the voltage of the secondary battery, the second shows the voltage of the positive electrode, and the third shows the voltage of the negative electrode. The discharging was performed in a CC mode at 0.33C until 2.5V based on the voltage of the secondary battery. From the positive electrode voltage curve in FIG. 2, it can be seen that the voltage of Example 2 drops more rapidly than the voltage of Comparative Example 2 at the end of discharge, and that since the negative electrodes of Example 2 and Comparative Example 2 are the same, the positive electrode of Example 2 has a relatively high resistance at the end of discharge. The voltage of a secondary battery is determined by the voltage difference between the positive electrode and the negative electrode. Therefore, it can be seen in Example 2 that the increase in the voltage of the negative electrode at the end of discharge is suppressed due to the voltage drop of the positive electrode, and from this, the depth of use of the silicon-based compound (SiO_{β} (0<β<2) oxide) decreases. In FIG. 2, Blended cathode 5:5 shows a graph of Example 2, and Single crystalline cathode 100% shows a graph of Comparative Example 2.

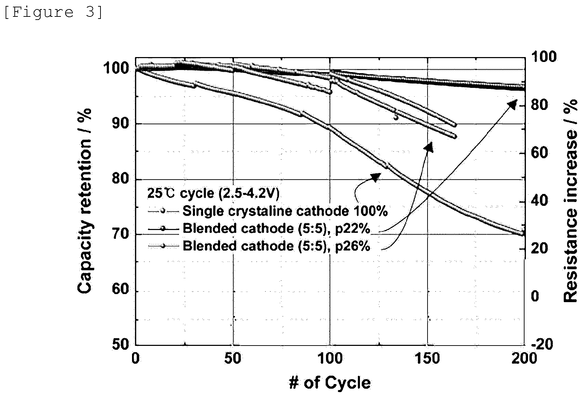

FIG. 3 is a view showing cycle life characteristics measured by performing 0.33 C charging and 0.5 C discharging at room temperature for the lithium secondary batteries prepared in Example 1 and Comparative Examples 1 and 3. When charging the battery, the charging was set to be started in a CC mode and then changed to a CV mode so that the charging would be cutoff at 4.2 V and 0.05C. When discharging the battery, the discharging was set to be cutoff at 2.5 V in a CC mode. From FIG. 3, it could be confirmed that the lithium secondary battery prepared in Comparative Example 3 had inferior life characteristics compared to the lithium secondary battery prepared in Example 1.

In FIG. 3, Blended cathode 5:5 p22% shows a graph of Example 1, Single crystalline cathode 100% shows a graph of Comparative Example 1, and Blended cathode 5:5 p26% shows a graph of Comparative Example 3.

## Claims

1. A secondary battery comprising:
a positive electrode;
a negative electrode;
a separator; and
an electrolyte,
wherein the negative electrode comprises a negative electrode active material layer,
wherein the negative electrode active material layer comprises a SiO_{β} (0<β<2) oxide and a carbon-based active material,
wherein the positive electrode comprises a positive electrode active material layer,
wherein the positive electrode active material layer comprises a small particle active material whose average particle diameter (D₅₀) is 3 µm to 10 µm and a large particle active material whose average particle diameter (D₅₀) is 8 µm to 20 µm, and
wherein the positive electrode active material layer has a porosity of 19% to 23%.

2. The secondary battery of claim 1, wherein the small particle active material and the large particle active material each contain 80 mol% or more of nickel with respect to a total number of moles of transition metals excluding lithium.

3. The secondary battery of claim 1, wherein the small particle active material has a single particle form.

4. The secondary battery of claim 1, wherein the SiO_{β} (0<β<2) oxide is included in an amount of 1 to 15 parts by weight based on 100 parts by weight of a negative electrode active material of the negative electrode active material layer.

5. The secondary battery of claim 1, wherein a weight ratio of the small particle active material and the large particle active material (weight of the small particle active material: weight of the large particle active material) is 2:8 to 8:2.
